# EUROPEAN PATENT APPLICATION

(11) **EP 1 594 259 A1**
(43) Date of publication of application: **09.11.2005**
(21) Application number: 04010918.3
(22) Date of filing: 07.05.2004
(51) Int. Cl.: H04L 12/28

(54) **Extension of initiation messages to improve channel estimation**

(71) Applicant: Infineon Technologies AG, 81669 München (DE)
(72) Inventor: Lewis, Michael, 195 52 Märsta (SE)
(74) Representative: Graf Lambsdorff, Matthias

(57) **Abstract**

The present invention relates to a method of setting up a communications channel between a sending unit and a receiving unit in a packet based communications network. The method, when applied in the context of IEEE 802.11 WLAN, provides a means for including extra training information with the RTS (or POLL) frame, and a means for returning at least some of the channel estimation data with the CTS frame, while maintaining full backward-compatibility with legacy 802.11a /802.11g stations. This provides increased efficiency, since reservation of the medium can be done in parallel with at least some of the channel estimate acquisition.

## Description

### Field of invention

The present invention relates to a method of setting up a communications channel between a sending unit and a receiving unit in a packet based communications network.

The invention is based on that the MAC-layer of the sending unit is brought to form an initiating packet, the PHY-layer of said sending unit is brought to send the initiating packet, the PHY-layer of the receiving unit is brought to receive and decode the initiating packet, and the MAC-layer of the receiving unit is brought to perform an evaluation of the initiating packet.

The MAC-layer of the receiving unit is then brought to form a responding packet, the PHY-layer of the receiving unit is brought to send the responding packet, the PHY-layer of the sending unit is brought to receive and decode the responding packet, and the MAC-layer of the sending unit is brought to evaluate the responding packet.

This is a part of a standard set up procedure in many packet based communications networks.

The present invention relates more specifically to OFDM-based wireless LAN MIMO networks, where it is desired to establish a reliable estimate of the channel transfer function from each transmitting antenna to each receiving antenna at both the receiving and transmitting devices; while maintaining interoperability with existing 802.11a/g OFDM devices.

The present invention also relates to a method for a transceiver brought to function according to the inventive method, a packet based communications network adapted to function according to the inventive method, and a transceiver adapted to function in an inventive communications network.

### Definitions

The OSI, or Open System Interconnection, model defines a networking framework for implementing protocols in seven layers. Control is passed from one layer to the next, starting at the application layer in one station, proceeding to the bottom layer, over the channel to the next station and back up the hierarchy.

The Physical (PHY) layer is the first layer or bottom layer of the OSI model. It conveys the bit stream, electrical impulse, light or radio signal, through the network at the electrical and mechanical level. It provides the hardware means of sending and receiving data on a carrier, including defining cables, cards and physical aspects.

The Media Access Control (MAC) Layer is one of two sublayers that make up the second layer, the Data Link Layer, of the OSI model. The MAC layer is responsible for moving data packets to and from one Network Interface Card to another across a shared channel. The MAC-layer also controls how a computer on the network gains access to the data and permission to transmit it.

The other sublayer of the Data Link Layer is the Logical Link Control layer, that controls frame synchronization, flow control and error checking.

Orthogonal Frequency Division Multiplexing (OFDM) is an FDM modulation technique for transmitting large amounts of digital data over a radio wave. OFDM works by splitting the radio signal into multiple smaller sub-signals that are then transmitted simultaneously at different frequencies to the receiver.

Multiple-input multiple-output (MIMO) networks are networks where the sender and receiver both use multiple antennae for both transmission and reception.

### Description of the background art

It is generally a known problem to perform a set up procedure when establishing a communications channel in a network environment without adding to much overhead information, by keeping the set up procedure as short as possible.

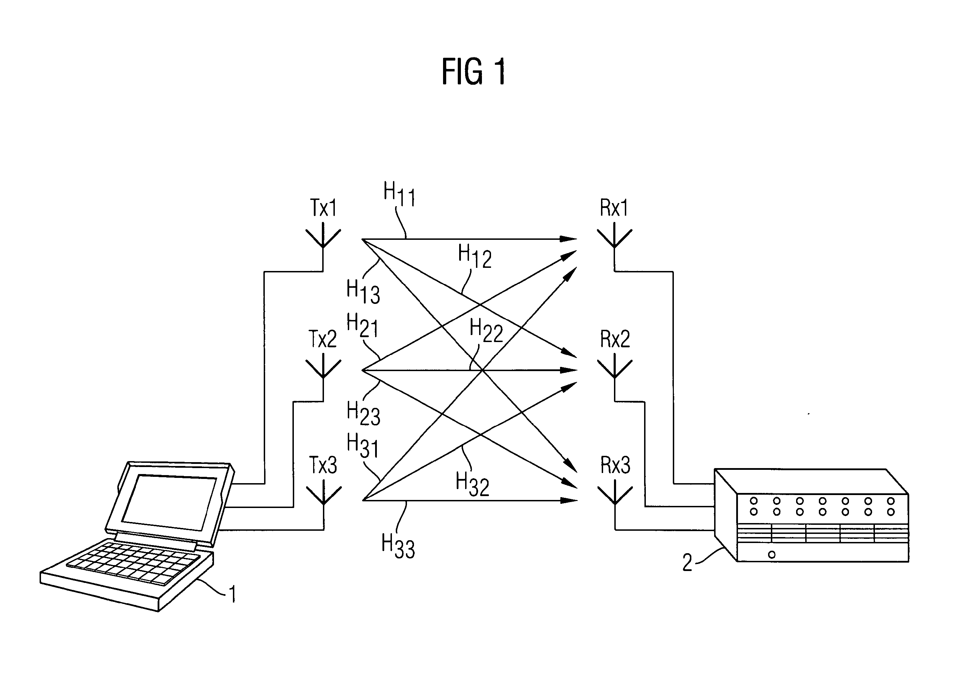

When it comes to wireless LAN systems it is an aim to generate a new standard with a measured throughput of greater than 100Mbit/s. The dominant technology that promises to be able to deliver these increased speeds are so-called MIMO systems. The maximum theoretical throughput of such a system scales linearly with the number of antennae, which is the reason that the technology is of great interest for high throughput applications. An example of such a system is shown in Figure 1, with a sending unit, a laptop, transmitting to a receiving unit, an access point, where each unit or device has three antennae.

The reason why these systems can offer improved throughput compared to single antenna systems, is that there is spatial redundancy: each piece of information transmitted from each transmitting antenna travels a different path to each receiving antenna, and experiences distortion with different characteristics and thus different channel transfer functions.

In the example of Figure 1, there are three different channel transfer functions from each antenna to each receiver: the transfer function from transmitting antenna x to receiving antenna y is denoted by Hxy. Greater capacity is obtained by making use of the spatial redundancy of these independent or semi-independent channels, perhaps in conjunction with other coding techniques, to improve the chance of successfully decoding the transmitted data. The examples given in this description use three transmitting antennae. It is however obvious for the skilled man that any arbitrary number of transmitting antennae can be used.

There is a wide range of published techniques for encoding information over a MIMO channel set, e.g. linear beam forming with a Wiener filter receiver, space time block coding, etc. In virtually all of the techniques, it is necessary to obtain a reasonably accurate estimate of the channel transfer functions, or the channel estimates, at least at the receiving unit. However, in order to make the best use of the available channel capacity, it is also necessary for these channel estimates to be transferred to the sending unit by means of an initial exchange of transmissions prior to the main data transfer.

In this specific environment it is thus a problem to set up the communications channel with optimised channel transfer functions between sending and receiving unit since the time overhead involved in this exchange leads to a trade-off, since it works against any increase in the rate of transfer of subsequent data. In practice, this means that the subsequent amount of data transferred must be sufficiently large that the average data rate remains sufficiently high.

An important criterion of the high-throughput WLAN standardisation activity is that the new systems can interoperate with existing 802.11a and 802.11g OFDM WLAN systems. This means, primarily, that the legacy systems can interpret sufficient information from the transmission of the new system such that they do not interact in a negative manner, e.g. making sure that legacy systems remain silent during an ongoing transmission of the new system.

### Summary of the present invention

With the purpose of providing a solution to the above mentioned problems, the present invention teaches that a first optimising unit, belonging to the PHY-layer of said sending unit, is brought to append communication parameters pertaining to the sending unit to the initiating packet which are sent during some of the time period used for the decoding by the PHY layer or evaluation by the MAC-layer of the receiving unit.

A second optimising unit, belonging to the PHY-layer of the receiving unit, is brought to analyse the communication parameters of the sending unit and to append communication parameters pertaining to the receiving unit to the responding packet which are sent during some of the time period used for the decoding by the PHY layer or evaluation by the MAC-layer of the sending unit.

The first optimising unit is brought to analyse the communication parameters of the receiving unit and to optimise the set up of the PHY-layer of the sending unit according to the communication parameters of the receiving unit, and the second optimising unit is brought to optimise the set up of the PHY-layer of the receiving unit according to the communication parameters of the sending unit.

If the setting up of the communications channel comprises the sending and receiving of several packages between the sending and receiving unit, then the present invention proposes that the first and second optimising unit are brought to use any time required by the MAC-layers of respective sending and receiving unit to evaluate and form the packages to send communications parameters, to evaluate communication parameters and to optimise the set up of respective PHY-layer.

The sending and receiving units may be units working in a manner compatible with the IEEE 802.11a or 802.11g WLAN standard.

In this case it is proposed that the initiating packet is a RTS or Poll message, and that the responding packet is a CTS message.

It is proposed that the analysing of received communication parameters performed by the first and second optimising units is done at least during the SIFS between the RTS or Poll, the CTS and any following communication packet.

It is also proposed that, if the sending and receiving units are MIMO transceivers, the added communication parameters pertaining to the sending unit includes an extra training sequence to enable channel estimation, and that the added communication parameters pertaining to the receiving unit includes channel feedback data.

Such an extra training sequence may include protocol information such as information on the number of transmitting antennae and the transmitting rate to be used and such channel feedback information may include channel estimates made by the second optimising unit, such as an optimised channel transfer function.

It is proposed that a reserved bit in the RTS or Poll message is used to indicate the use of the present invention to units within the network that are compatible with the new technique, which bit is ignored by legacy units in the network functioning according to IEEE 802.11a or 802.11g.

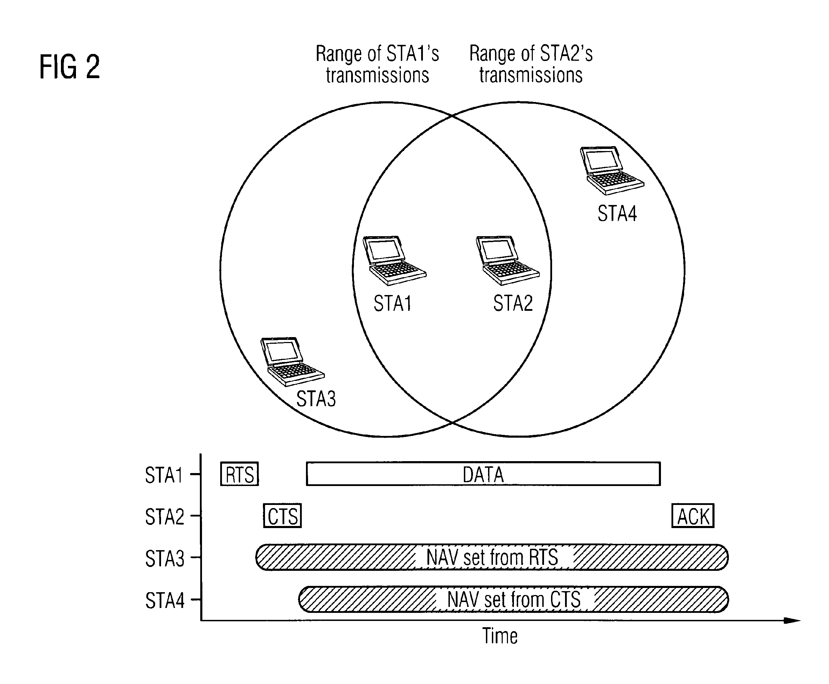

One mechanism that can be used to accomplish the possibility for the legacy systems to interpret sufficient information from the transmission of the new system is the network allocation vector (NAV) defined in the 802.11 WLAN standard, which is a timer that specifies a duration during which a transmitter must remain silent. Each transmission contains a "duration" field, and stations that receive a transmission not directed to them examine the duration field, and set their NAV accordingly. Thus, it is possible to "reserve the medium" through the exchange of a pair of short frames, where the duration field in each of the short frames is set such that it extends just beyond all subsequent transmissions. One such frame exchange uses request to send (RTS) and clear to send (CTS) frames, and its operation is shown in Figure 2. The original purpose of this transaction was to prevent stations in the vicinity of the receiver that cannot hear the transmitter from beginning their own transmissions. In the example shown, STA4 cannot hear transmissions from STA1. However, it hears the transmission of the CTS from STA2 and is therefore silent for the remaining duration of STA1's transmission.

A further benefit of the RTS-CTS procedure is that it provides a fast way to establish whether or not a collision has occurred, i.e. a station within range of STA2 began transmitting simultaneously with STA1, and thereby allows recovery before a large amount of time is wasted in attempting to transmit the data payload.

For the purposes of interoperability, the RTS and CTS frames are sent in a format that legacy stations are able to receive and interpret. The DATA and ACK frames may then be sent using any modulation technique or format, with one minor point: it is necessary that the start of the DATA transmission be in a format recognisable to legacy devices else stations which hear only the RTS will reset their NAV when they hear no valid DATA transmission. However, the payload may be sent using any modulation technique.

Other frame exchanges are also possible; for instance in a WLAN cell where the access point actively polls associated stations, the poll frame may take the place of the RTS frame in the exchange.

An alternative mechanism for interoperability is for the transmitter to send only a CTS frame, thereby setting the NAV of all stations within range. This involves only half of the overhead of the RTS-CTS exchange, but has the drawback that stations in range of the receiver but out of range of the transmitter will not have their NAV set, and so offers no protection against collisions.

The overhead from the above requirements presents significant difficulties in obtaining useful performance improvements in a MIMO WLAN. Firstly, the requirement to obtain a reliable channel estimate from each transmitting antenna to each receiving antenna requires a considerable amount of training information to be sent, and the channel estimates so generated must then be sent back to the sending station. The required time for this process scales linearly with the number of antennae if no correlation between antennae is assumed. Secondly, some form of protection frames may need to precede the main transmission to avoid conflict with legacy stations. Even if legacy stations can detect the MIMO transmission, it is still likely to be desirable to perform an RTS-CTS sequence: for efficiency, the MIMO transmissions will contain a lot of data and hence the impact of lost transmissions due to collisions will be high.

It should be noted that the present invention also relates to a transceiver functioning as a node in a communications network. An inventive transceiver comprises a first optimising unit belonging to the PHY-layer of the transceiver, which enables the transceiver to act as an inventive sending unit, and a second optimising unit belonging to the PHY-layer of the transceiver, which enables the transceiver to act as an inventive receiving unit.

### Advantages

The advantages of the present invention are that the proposed technique gives a significant reduction in overhead / improvement in efficiency for OFDM-based MIMO WLAN systems that need to be backward compatible with legacy 802.11a/g systems. By integrating some or all of the channel estimation and feedback steps into the RTS-CTS or POLL-CTS procedure, and optionally also other protocol information such as antenna pattern and rate selection, the desirable properties of protection from legacy device transmission and collision detection are integrated into the channel estimation procedure with very little overhead.

### Brief description of drawings

A method, a communications network and a transceiver according to the present invention will now be described in more detail with reference to accompanying drawings, in which:
- Figure 1: is a schematic view of a MIMO system showing channel transfer functions between antennae,
- Figure 2: is a schematic view of the use of setting the NAV using RTS and CTS frames,
- Figure 3: is a schematic and very simplified view of a sending and receiving unit and their respective PHY and MAC layer,
- Figure 4: is a schematic view of the known IEEE 802.11a/g OFDM frame structure and SIFS timing,
- Figure 5: is a schematic view of how MIMO channel estimation / feedback is integrating into the RTS-CTS exchange according to the present invention, and
- Figure 6: is a schematic view of how the exchange is extended with an additional CTS at the sending unit,
- Figure 7: is a schematic and highly simplified view of computer program products and a computer readable medium according to the present invention.

### Detailed description of the invention and embodiments thereof as presently preferred

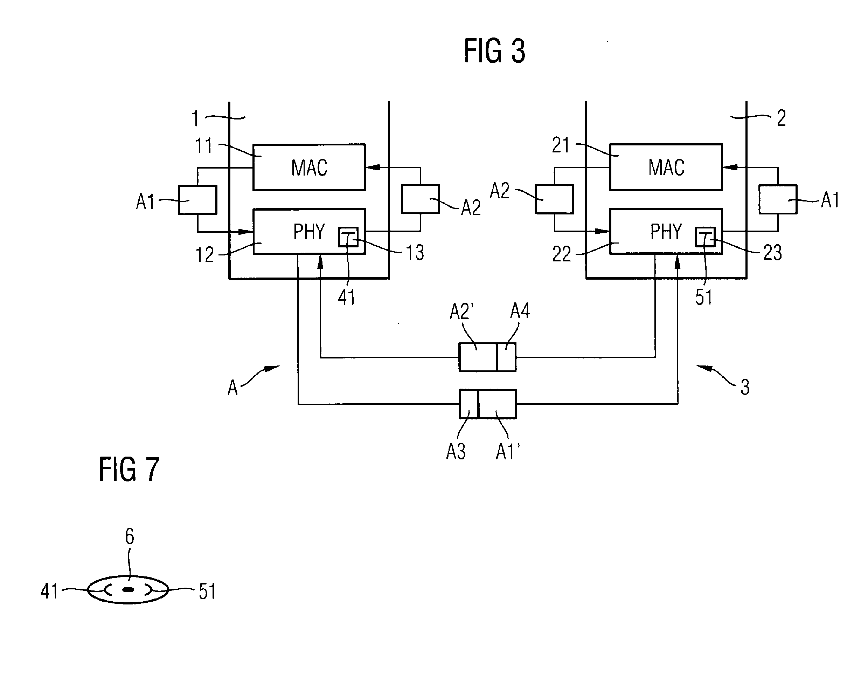

With reference to figure 3, a method of setting up a communications channel A between a sending unit 1 and a receiving unit 2 in a packet based communications network 3, and a packet based communications network 3, is illustrated.

The MAC-layer 11 of the sending unit 1 is brought to form an initiating packet Aland the PHY-layer 12 of the sending unit 1 is brought to send the initiating packet A1'.

The PHY-layer 22 of the receiving unit 2 is brought to receive and decode the initiating packet A1' and the MAC-layer 21 of the receiving unit 2 is brought to perform an evaluation of the initiating packet A1 and to form a responding packet A2.

The PHY-layer 22 of the receiving unit 2 is brought to send the responding packet A2', and the PHY-layer 12 of the sending unit 1 is brought to receive and decode the responding packet A2' and the MAC-layer 11 of the sending unit 1 is brought to evaluate the responding packet A2.

The present invention specifically teaches that a first optimising unit 13, belonging to the PHY-layer 12 of the sending unit 1, is brought to append communication parameters A3 pertaining to the sending unit 1 to the initiating packet A1' which are sent during some of the time period used for the decoding by the PHY layer 22 or evaluation by the MAC-layer 21 of the receiving unit 2.

A second optimising unit 23, belonging to the PHY-layer 22 of the receiving unit 2, is brought to analyse the communication parameters A3 of the sending unit 1 and to append communication parameters A4 pertaining to the receiving unit 2 to the responding packet A2' which are sent during some of the time period used for the decoding by the PHY layer 22 or evaluation by the MAC-layer 21 of the sending unit 1.

The first optimising unit 13 is brought to analyse the communication parameters A4 of the receiving unit 2 and to optimise the set up of the PHY-layer 12 of the sending unit 1 according to the communication parameters A4 of the receiving unit 2, and the second optimising unit 23 is brought to optimise the set up of the PHY-layer 22 of the receiving unit 2 according to the communication parameters A3 of the sending unit 1.

The present invention also teaches that if the setting up of the communications channel A comprises the sending and receiving of several packages between the sending and receiving unit, then are the first and second optimising unit 1, 2 brought to use any time required by the MAC-layers 11, 21 of said sending and receiving unit 1, 2 to evaluate and form these packages to send communications parameters, to evaluate communication parameters and to optimise the set up of respective PHY-layer 12, 22.

In the description, the unit that initiates a communications channel has been called a sending unit and the other unit has been called a receiving unit. It is however obvious that any one unit in a communications network may act as both a sending and a receiving unit. Such a unit is often called a transceiver.

The present invention thus relates to a method for a transceiver to function as a node in a communications network, and a transceiver adapted to function as a node in a communications network, where a first optimising unit, belonging to the PHY-layer of the transceiver, enables the transceiver to act as an inventive sending unit, and where a second optimising unit, belonging to the PHY-layer of the transceiver, enables the transceiver to act as an inventive receiving unit.
The present invention may be used in any packet based communications network. The invention will now be described in more detail through the description of an embodiment where the communications network and the sending and receiving units 1, 2 acting within the network are brought to transmit and receive packets compatible with the IEEE 802.11a or 802.11g WLAN standard.

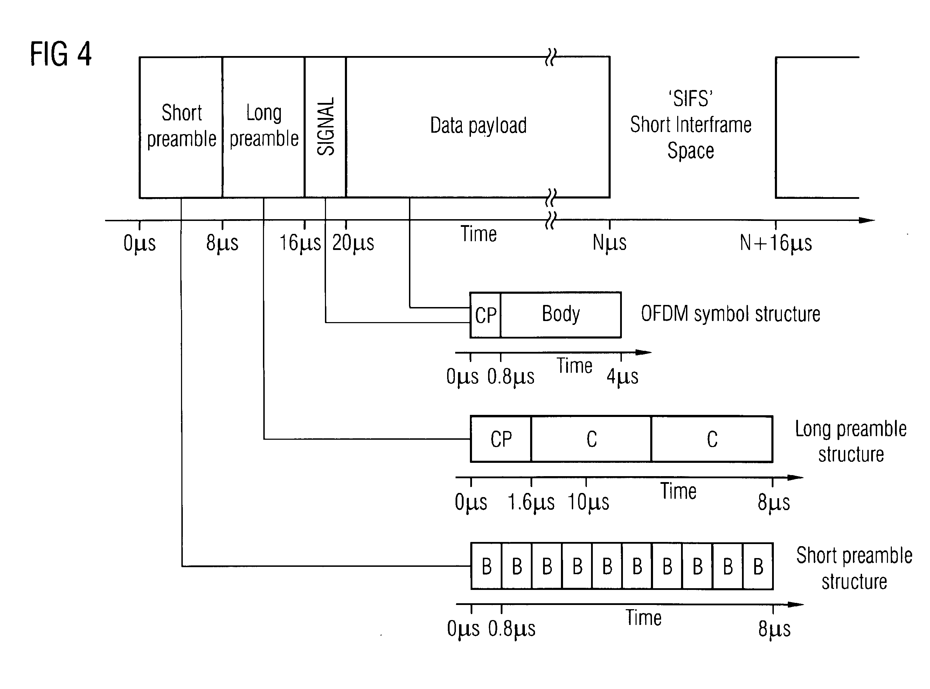

The structure of a legacy 802.11a/g OFDM transmission, as well as the timing requirements of the RTS-CTS / POLL-CTS exchange, will now be described with reference to Figure 4 in order to facilitate the understanding of the present invention.

An initiating packet A1 begins with the so-called short preamble. This consists of 10 repeats of a 0.8*µ*s sequence. This section is used by the receiving unit to detect the arrival of an incoming transmission and to perform some first coarse estimates of e.g. frequency offset. The next phase of the initiating packet A1 is the long preamble, which is generally used to perform fine estimation of the frequency offset and is also used to estimate the channel transfer function for each subcarrier. The long preamble consists 2 copies of a 3.2*µ*s long symbol, preceded by a 1.6*µ*s cyclic prefix: the cyclic prefix is a copy of the last half of a symbol, and means that multipath dispersion up to 1.6*µ*s in duration will have no effect on the channel estimate. After the long preamble comes the SIGNAL field: this is the first information-carrying symbol in the initiating packet, and is sent using the most robust form of BPSK coding. This symbol encodes information about the length and datarate of the remainder of the transmission. From this point onward the remainder of the transmission consists of OFDM data symbols modulated according to the parameters sent in the SIGNAL field. All information carrying symbols (the SIGNAL field and subsequent data payload) use the same OFDM symbol structure.

At the end of a transmitted frame, the standard defines that there is a pause of a fixed length before the recipient must reply. This pause is known as the "short interframe space" (SIFS). This is designed to be the absolute minimum amount of time that a low-complexity receiver implementation would need to decode the received message, determine whether it is required to reply, and to switch over from reception and transmission mode.

802.11a/g OFDM transmissions use convolutional coding of the transmitted signal, requiring a Viterbi decoder in the receiver. A large portion of this SIFS time is therefore dedicated to the latency of the Viterbi decoder. As an indication of its magnitude, the 802.11b standard requires no Viterbi decoder, and SIFS time is defined as 9*µ*s as compared to 16*µ*s for 802.11a. The time require to switch from receive to transmit is, on the other hand, small (required to be <2*µ*s).

The invention is to make use of this "dead time" at the end of an OFDM frame transmission in order to allow MIMO transceivers to transmit extra information to enable channel estimation and the transmission of the resulting channel estimates. The OFDM frame is transmitted as per the 802.11a/g standard, possibly with the exception that one of the bits in the PLCP header that are denoted "Reserved" in the current standard may be used to indicate to MIMO transceivers that this frame contains extra information. Thus, legacy 802.11a/g devices will receive the frame as normal and interpret the data contained therein. However, at the end of the OFDM frame additional information is appended. This is ignored by legacy devices, but may be used by MIMO transceivers.

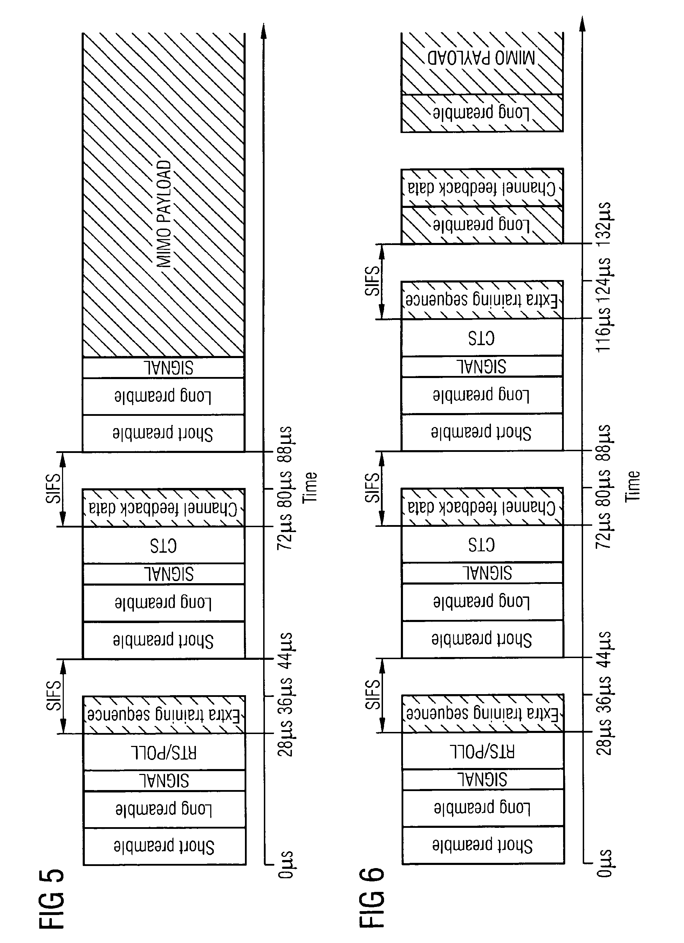

It is proposed to use this technique in conjunction with the RTS-CTS (or POLL-CTS) frame exchange. Since MIMO transmissions will involve large amounts of data in order to minimise the impact of overheads, it is highly likely that RTS-CTS will be needed anyway, so as to provide medium reservation /collision detection. The transmitted sequence could then be as shown in Figure 5, where data not interpreted by legacy devices is shown in grey.

Firstly, the transmitting MIMO-enabled device sends an RTS (or POLL) frame. This causes legacy devices within range of the transmitter to set their NAV such that the remainder of the transmission is protected (including the MIMO sections which they may not be able to decode or detect). If one of the reserved bits in the transmission are used, these will be ignored by legacy devices. At the end of the RTS/POLL frame, legacy devices cease reception. However, MIMO-enabled devices will continue receiving the extra training sequence at the end of the frame. This could, for instance, be a long preamble sequence transmitted using a different set of antennae, or a different subcarrier to antenna mapping, to that used for the preceding sections of the frame. It should be noted that the timing requirements for decoding the RTS or POLL information for the MIMO-enabled device are not affected, since this information can be processed within the receiving device's Viterbi decoder and subsequently in the MAC layer at the same time as the extra training sequence is being received.

An additional refinement is to actually encode protocol information in the extra training sequence; e.g. information on the number of transmitting antennae and the transmission rate to be used. If this is encoded in the most robust BPSK transmission mode, the channel estimates available from the previous estimation could be extrapolated to give a sufficient estimate quality to demodulate the information and thereby determine the transmitted data sequence. At this point channel estimation can proceed in the conventional manner.

After receiving the RTS / POLL frame, the receiving MIMO-enabled device will have observed that a MIMO transmission is being established, and responds to the RTS frame with a CTS frame. This causes legacy devices within range of the receiver to set their NAV to protect the remainder of the transmission. At the end of the CTS frame, additional OFDM symbols are appended in which the channel estimate made at the receiving MIMO-enabled device is encoded. A 54Mbps OFDM symbol can encode 216 data bits, and so two such symbols could encode 432 data bits. These additional symbols are ignored by legacy devices.

Assuming the amount of channel estimate information that could be transferred at the end of the CTS frame is sufficient, the transmitting MIMO-enabled device can proceed with the main transmission.

For the case where RTS-CTS was used to reserve the medium, the legacy standard states that devices that hear an RTS frame but do not observe the start of a subsequent data frame may reset their NAV. In order to avoid this, Figure 5 depicts the main transmission beginning with a full OFDM preamble and SIGNAL field. This overhead could be eliminated if protection in the vicinity of the receiver only was considered adequate.

In the case that a greater amount of channel estimate information needs to be transferred (e.g. in the case of a large number of transmit antennae being used), the technique can be extended as shown in Figure 6. An additional CTS frame is sent by the transmitting MIMO-enabled device, with an additional training sequence appended which allows further channel estimation to be performed at the MIMO-enabled receiver. Legacy receivers will observe only an additional CTS frame, which will cause all devices within range of the transmitting MIMO-enabled device to set their NAV for the remaining duration of the transmission.

After this stage, there is no requirement to maintain compatibility with 802.11a/g frame formats since all legacy devices within range of both the transmitter and the receiver have their NAV set. Figure 6 shows one possible example where the remaining channel estimate information is sent back from the receiving device to the transmitting device preceded only by a long preamble, in this case to enable timing and phase resynchronisation. After this, the transmitting device can proceed with the main MIMO transmission, which is similarly preceded by a long preamble sequence.

The present invention also relates to a first computer program product 4, comprising computer program code 41, schematically shown in figure 3, which, when executed by a computer unit, enables this computer unit to act as an inventive first optimising unit 13.

The present invention also relates to a second computer program product 5, comprising computer program code 51, schematically shown in figure 3, which, when executed by a computer unit, enables this computer unit to act as an inventive second optimising unit 23.

Figure 7 shows that the present invention also relates to a computer readable medium 6, in the figure exemplified by a compact disc, on which the storage of computer program code 41, 51 according to the first or second computer program product is stored.

It will be understood that the invention is not restricted to the aforedescribed and illustrated exemplifying embodiment thereof and that modifications can be made within the scope of the inventive concept as illustrated in the accompanying Claims.

## Claims

1. A method of setting up a communications channel between a sending unit and a receiving unit in a packet based communications network, where the MAC-layer of said sending unit is brought to form an initiating packet, where the PHY-layer of said sending unit is brought to send said initiating packet, where the PHY-layer of said receiving unit is brought to receive and decode said initiating packet, where the MAC-layer of said receiving unit is brought to perform an evaluation of said initiating packet and to form a responding packet, where the PHY-layer of said receiving unit is brought to send said responding packet, where the PHY-layer of said sending unit is brought to receive and decode said responding packet, and where the MAC-layer of said sending unit is brought to evaluate said responding packet, **characterised in, that** a first optimising unit, belonging to the PHY-layer of said sending unit, is brought to append communication parameters pertaining to said sending unit to said initiating packet which are sent during some of the time period used for said decoding by the PHY layer or evaluation by the MAC-layer of said receiving unit, that a second optimising unit, belonging to the PHY-layer of said receiving unit, is brought to analyse the communication parameters of said sending unit and to append communication parameters pertaining to said receiving unit to said responding packet which are sent during some of the time period used for said decoding by the PHY layer or evaluation by the MAC-layer of said sending unit, that said first optimising unit is brought to analyse the communication parameters of said receiving unit and to optimise the set up of the PHY-layer of said sending unit according to the communication parameters of the receiving unit, and that said second optimising unit is brought to optimise the set up of the PHY-layer of said receiving unit according to the communication parameters of said sending unit.

2. Method according to claim 1 where the setting up of said communications channel comprises the sending and receiving of several packets between said sending and receiving unit, **characterised in, that** said first and second optimising unit are brought to use some of the time required by the PHY-layers of said sending and receving unit to decode said packets or the time required by the MAC-layers of said sending and receiving unit to evaluate and form said packets, to send communications parameters, to evaluate communication parameters and to optimise the set up of respective PHY-layer.

3. A method according to claim 1 or 2, **characterised in, that** said sending and receiving units are brought to transmit packets compatible with the IEEE 802.11a or 802.11g WLAN standard.

4. A method according to claim 3, **characterised in, that** said initiating packet is a RTS or Poll message, and that said responding packet is a CTS message.

5. A method according to claim 4, **characterised in, that** the analysing of received communication parameters performed by said first and second optimising units is done at least during the SIFS between said RTS or Poll, said CTS and the following communication packet.

6. A method according to claim 3, 4 or 5, **characterised in, that** said sending and receiving units are MIMO transceivers, that said added communication parameters pertaining to said sending unit includes an extra training sequence to enable channel estimation, and that said added communication parameters pertaining to said receiving unit includes channel feedback data.

7. A method according to claim 6, **characterised in, that** said extra training sequence includes protocol information such as information on the number of transmitting antennae and the transmitting rate to be used.

8. A method according to claim 6, **characterised in, that** said channel feedback information includes channel estimates made by said second optimising unit, such as an optimised channel transfer function.

9. A method according to any one of claims 3 to 8, **characterised in, that** a reserved bit in said RTS or Poll message is used to indicate the use of said method to units within said network that are compatible with the new technique, , which bit is ignored by legacy units in said network functioning according to IEEE 802.11a or 802.11g.

10. A method for a transceiver to function as a node in a communications network, **characterised in, that** a first optimising unit, belonging to the PHY-layer of said transceiver, enables said transceiver to act as a sending unit according to any one of claims 1 to 9, and that a second optimising unit, belonging to the PHY-layer of said transceiver, enables said transceiver to act as a receiving unit according to any one of claims 1 to 9.

11. A packet based communications network comprising at least a sending unit and a receiving unit, where the MAC-layer of said sending unit is adapted to form an initiating packet, where the PHY-layer of said sending unit is adapted to send said initiating packet, where the PHY-layer of said receiving unit is adapted to receive and decode said initiating packet, where the MAC-layer of said receiving unit is adapted to perform an evaluation of said initiating packet and to form a responding packet, where the PHY-layer of said receiving unit is adapted to send said responding packet, where the PHY-layer of said sending unit is adapted to receive and decode said responding packet, and where the MAC-layer of said sending unit is adapted to evaluate said responding packet, **characterised in, that** the PHY-layer of said sending unit comprises a first optimising unit, that the PHY-layer of said receiving unit comprises a second optimising unit, that said first optimising unit is adapted to append communication parameters pertaining to said sending unit to said initiating packet which are sent during some of the time period used for said decoding by the PHY layer or evaluation by the MAC-layer of said receiving unit, that said second optimising unit is adapted to analyse the communication parameters of said sending unit and to append communication parameters pertaining to said receiving unit to said responding packet which are sent during some of the time period used for said decoding by the PHY layer or evaluation by the MAC-layer of said sending unit, that said first optimising unit is adapted to analyse the communication parameters of said receiving unit and to optimise the set up of the PHY-layer of said sending unit according to the communication parameters of the receiving unit, and that said second optimising unit is adapted to optimise the set up of the PHY-layer of said receiving unit according to the communication parameters of said sending unit.

12. A network according to claim 11 where the setting up of said communications channel comprises the sending and receiving of several packets between said sending and receiving unit, **characterised in, that** said first and second optimising unit are adapted to use some of the time required by the PHY-layers of said sending and receiving unit to decode said packets or the time required by the MAC-layers of said sending and receiving unit to evaluate and form said packets to send communications parameters, to evaluate communication parameters and to optimise the set up of respective PHY-layer.

13. A network according to claim 11 or 12, **characterised in, that** said sending and receiving units are adapted to transmit packets compatible with the IEEE 802.11a or 802.11g WLAN standard.

14. A network according to claim 13, **characterised in, that** said initiating packet is a RTS or Poll message, and that said responding packet is a CTS message.

15. A network according to claim 14, **characterised in**, said first and second optimising units are adapted to perform the analysing of received communication parameters at least during the SIFS between said RTS or Poll, said CTS and the following communication packet.

16. A network according to claim 13, 14 or 15, **characterised in, that** said sending and receiving units are MIMO transceivers, that said added communication parameters pertaining to said sending unit includes an extra training sequence to enable channel estimation, and that said added communication parameters pertaining to said receiving unit includes channel feedback data.

17. A network according to claim 16, **characterised in, that** said extra training sequence includes protocol information such as information on the number of transmitting antennae and the transmitting rate to be used.

18. A network according to claim 16, **characterised in, that** said channel feedback information includes channel estimates made by said second optimising unit, such as an optimised channel transfer function.

19. A network according to any one of claims 13 to 18, **characterised in, that** a reserved bit in said RTS or Poll message is used to indicate the use of said method to units within said network that are compatible with the new transmission method, which bit is ignored by legacy units in said network functioning according to IEEE 802.11a or 802.11g.

20. A transceiver adapted to function as a node in a communications network, **characterised in, that** the PHY-layer of said transceiver comprises a first optimising unit enabling said transceiver to act as a sending unit according to any one of claims 11 to 19, and that the PHY-layer of said transceiver comprises a second optimising unit enabling said transceiver to act as a receiving unit according to any one of claims 11 to 19.

21. First computer program product, **characterised in**, computer program code which, when executed by a computer unit, enables said computer unit to act as a first optimising unit according to any one of claims 1 to 20.

22. Second computer program product, **characterised in**, computer program code which, when executed by a computer unit, enables said computer unit to act as a second optimising unit according to any one of claims 1 to 20.

23. Computer readable medium, **characterised in**, the storage of computer program code according to claim 21 or 22.
